# EUROPEAN PATENT APPLICATION

(11) **EP 3 323 672 A1**
(43) Date of publication of application: **23.05.2018**
(21) Application number: 17199874.3
(22) Date of filing: 03.11.2017
(51) Int. Cl.: B60N 2/427, B60N 2/42, B60N 2/90

(54) **AIR BAG AND VEHICLE SEAT DEVICE**

(30) Priority: 17.11.2016 JP 2016224024
(71) Applicant: AISIN SEIKI KABUSHIKI KAISHA, Kariya-shi Aichi 448-8650 (JP)
(72) Inventor: MIZUNO, Ryosuke, Kariya-shi,, Aichi 448-8650 (JP); KAJINO, Hiroshi, Kariya-shi,, Aichi 448-8650 (JP); KIDENA, Yasuo, Kariya-shi,, Aichi 448-8650 (JP); NOZUE, Katsuya, Kariya-shi,, Aichi 448-8650 (JP)
(74) Representative: TBK

(57) **Abstract**

An air bag (10) includes: a bag body (30) that includes first and second pressing surfaces which face opposite to each other, in which the bag body includes a first pressing seat (31) that forms the first pressing surface, a second pressing seat (32) that forms the second pressing surface, and an intermediate member (33) that connects between the first and second pressing seats to form a side wall portion (SW) of the bag body, and the intermediate member has a bellows structure and is configured such that a first end portion (30a) side is higher than a second end portion (30b) side in a length direction of the bag body with respect to a height dimension of the side wall portion in a state where the bellows structure is developed.

## Description

### TECHNICAL FIELD

This disclosure relates to an air bag and a vehicle seat device.

### BACKGROUND DISCUSSION

In the related art, there is a vehicle seat device in which an air bag (bladder) is disposed on an inside of a seat cover. For example, JP 2015-96403A (Reference 1) discloses a configuration capable of changing a seat support shape set on a seat of a vehicle by expanding and contracting the air bag.

In addition, in the related art, a bag body of the air bag is formed by bonding two seat materials (cloth). That is, the two seat materials respectively form first and second pressing surfaces facing opposite to each other by adopting such a configuration. Therefore, it is possible to efficiently transmit a pressing force generated by expansion.

However, such an air bag having the bag body formed by bonding the two seat materials has a characteristic that a center portion of the bag body is largely expanded during expansion. Therefore, there may be a problem that an effective pressing area is limited or a design surface is bulged out according to the shape of the expanded air bag inside thereof so that an aesthetic appearance is impaired.

In addition, Reference 1 discloses it is desirable that a shape of an air bag is substantially an isosceles triangle shape in transverse cross section, that is, substantially a wedge shape during expanding in the air bag interposed between two members (a fixed plate and a movable plate) which are rotatably connected. However, since there is no disclosure on a specific structure for expanding the bag body into substantially the wedge shape, in this respect, there still remains room for improvement.

Thus, a need exists for an air bag capable of being formed in a further preferable expanded shape, and a vehicle seat device including the air bag.

### SUMMARY

An air bag according to an aspect of this disclosure preferably includes a bag body that includes first and second pressing surfaces which face opposite to each other. The bag body includes a first pressing seat that forms the first pressing surface, a second pressing seat that forms the second pressing surface, and an intermediate member that connects between the first and second pressing seats to form a side wall portion of the bag body. The intermediate member has a bellows structure and is configured such that a first end portion side in a length direction of the bag body is higher than a second end portion side with respect to a height dimension of the side wall portion in a state where the bellows structure is developed.

According to this configuration, it is possible to form a substantially wedge-shaped expansion shape in which the first end portion side of the bag body is bulged greater than the second end portion side in the length direction. Therefore, when the air bag is expanded, deformation of the first and second pressing surfaces can be suppressed and a wider pressing area can be secured. As a result, it is possible to further efficiently transmit the pressing force generated by expansion of the air bag. In addition, deterioration of an aesthetic appearance due to an expanded shape of the air bag, for example, deformation of the design surface caused by expansion of the air bag provided inside, or the like can be suppressed.

In the air bag, it is preferable that the intermediate member is formed by connecting a pair of two intermediate seats in a bellows shape, and each of the intermediate seats includes a lengthwise extending portion extending in a length direction of the bag body and is formed such that a dimension of the lengthwise extending portion in a width direction is gradually increased from a second end portion side toward a first end portion side in the length direction of the bag body.

According to this configuration, in a state where each of the intermediate seats connected in the bellows shape is developed, that is, the bag body is expanded, the height dimension of the first end portion side in the side wall portion is greater than the height dimension of the second end portion side. Therefore, the bag body can be expanded in a substantially wedge shape.

It is preferable that the air bag further includes a connecting seat that connects between the first and second pressing seats on an inside of the bag body by fixing a first connecting end to the first pressing seat and fixing a second connecting end to the second pressing seat.

That is, the first and second pressing seats are connected via the connecting seat provided on the inside of the bag body so that a separation distance between the first and second pressing seats at a portion at which the connecting seat is provided. According to this configuration, when the air bag is expanded, deformation of the first and second pressing surfaces can be suppressed and a further preferable expanded shape can be formed.

It is preferable that the air bag further includes first and second connecting seats that are aligned in the length direction of the bag body as the connecting seat, in which a length between the first connecting end and the second connecting end in the first connecting seat disposed on the first end portion side of the bag body in the length direction is longer than a length between the first connecting end and the second connecting end in the second connecting seat disposed on the second end portion side of the bag body in the length direction.

According to this configuration, a separation distance between the first and second connecting seats at a position on the first end portion side at which the first connecting seat is provided can be set greater than the separation distance between the first and second connecting seats at a position on the second end portion side at which the second connecting seat is provided. Therefore, when the air bag is expanded, deformation of the first and second pressing surfaces is suppressed and a substantially further preferable wedge-shaped expansion shape can be formed.

In the air bag, it is preferable that, in the connecting seat, the first connecting end fixed to the first pressing seat and the second connecting end fixed to the second pressing seat are extended in the width direction of the bag body.

According to this configuration, when the air bag is expanded, the separation distance between the first and second pressing seats can be defined in a range in which the first and second connecting ends extending in the width direction of the bag body are fixed. Therefore, deformation of the first and second pressing surfaces can be further effectively suppressed and a substantially preferable wedge-shaped expansion shape can be formed.

In the air bag, it is preferable that the connecting seat is disposed on the inside of the bag body in a state of being folded into two. According to this configuration, it is possible to suppress the thickness (height dimension) of the bag body in the contracted state. When the air bag is expanded and contracted, the connecting seat can be further smoothly developed and folded on the inside of the bag body.

A vehicle seat device according to another aspect of this disclosure preferably includes the air bag according to any one of above descriptions disposed on an inside of a seat cover.

According to this configuration, further preferable support performance can be imparted to the vehicle seat or the ease of getting on and off can be improved.

According to the aspect of this disclosure, a further preferable expanded shape can be formed.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a vehicle seat in which an air bag is provided;
Figs. 2A and 2B are explanatory views of an operation of the air bag provided in the seat (Fig. 2A: when the air bag is contracted and Fig. 2B: when the air bag is expanded);
Figs. 3A and 3B are side views of the air bag (Fig. 3A: when the air bag is contracted and Fig. 3B: when the air bag is expanded);
Fig. 4 is an exploded perspective view of the air bag;
Figs. 5A to 5F are plan views of a seat material configuring the air bag; and
Fig. 6 is a plan view of the air bag.

### DETAILED DESCRIPTION

Hereinafter, an embodiment of a vehicle seat device where an air bag is disposed on an inside of a seat cover will be described with reference to drawings.

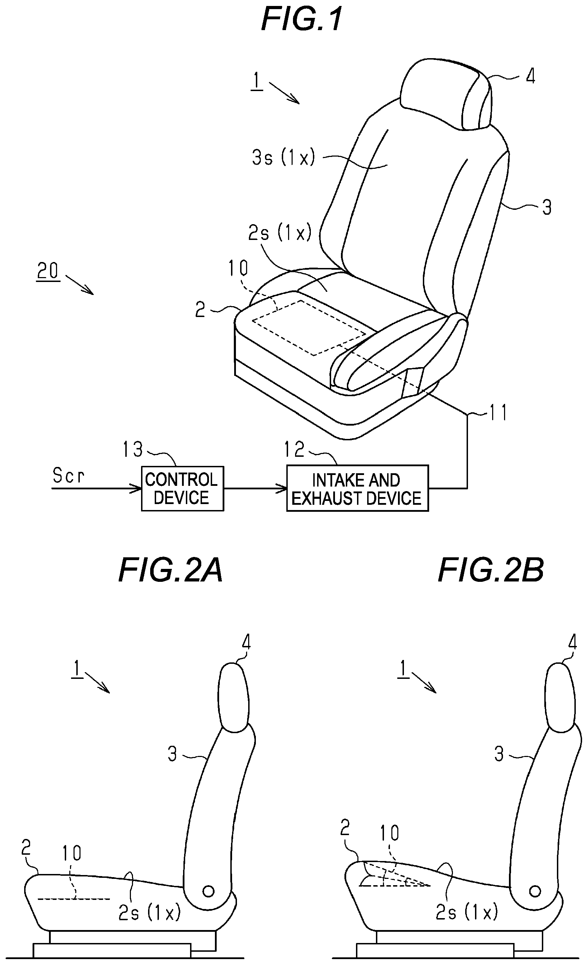

As illustrated in Fig. 1, a seat 1 for a vehicle includes a seat cushion 2 and a seat back 3 that is provided at a rear end portion of the seat cushion 2. A headrest 4 is provided at an upper end of the seat back 3.

In addition, as illustrated in Fig. 1 and Figs. 2A and 2B, the seat 1 of the embodiment includes an air bag 10 provided on an inside of a seat cover 1x configuring a seating surface 2s. Specifically, the air bag 10 is connected to an intake and exhaust device 12 via an air tube 11 which is a flow path of air. In addition, the air tube 11 of the embodiment is formed using a soft resin which can be elastically deformed. Furthermore, an operation of the intake and exhaust device 12 is controlled by a control device 13. Furthermore, an operation input signal Scr for an operation switch (not illustrated) is input into the control device 13. The control device 13 of the embodiment is configured to control the operation of the intake and exhaust device 12 based on the operation input signal Scr.

That is, the air bag 10 of the embodiment is expanded by pressure-feeding of air via the air tube 11 and is contracted by discharging an internal air. In addition, in the seat 1 of the embodiment, the air bag 10 is provided at a front position (position on a left side in Figs. 2A and 2B) of the seat cushion 2. In the embodiment, a seat device 20 capable of vertically displacing the front position of the seat cushion is formed in such a manner that the seating surface 2s is bulged upward with the expansion of the air bag 10.

Specifically, in the seat device 20 of the embodiment, in order to displace the front position of the seat cushion 2 in accordance with an operation request of an occupant indicated by the operation input signal Scr, the control device 13 executes the operation of the intake and exhaust device 12, that is, an intake and exhaust control with respect to the air bag 10. That is, in a case where the occupant is seated on the seat 1, the seat device 20 of the embodiment can ensure excellent support performance by lifting the front position of the seat cushion 2 upward. When the occupant gets on or off, it is possible to improve the ease of getting on and off by lowering the front position of the seat cushion 2.

### Air Bag

A configuration of the air bag 10 provided in the seat 1 of the embodiment will be described.

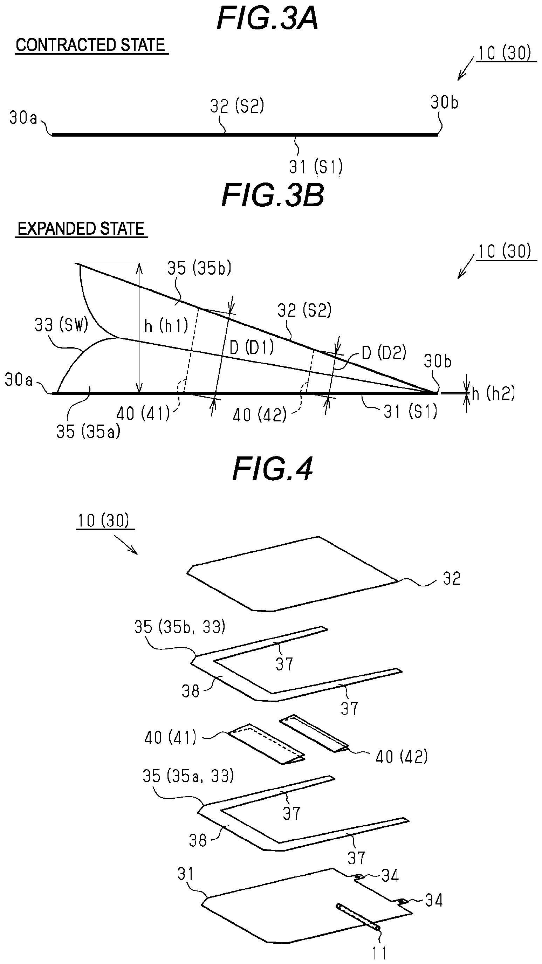

As illustrated in Figs. 3A and 3B, the air bag 10 of the embodiment includes a bag body 30 having first and second pressing surfaces S1 and S2 facing each other in the opposite directions. In addition, the air bag 10 is configured such that the bag body 30 is bulged in a substantially wedge shape by being filled with air. Furthermore, as illustrated in Fig. 2B, in the seat 1 of the embodiment, the air bag 10 is disposed on the inside of the seat cover 1x configuring the seating surface 2s of the seat cushion 2 in a state where a first end portion 30a side, which is more largely bulged in a length direction (rightward and leftward direction in Figs. 2A and 2B) of the bag body 30, faces the front side of the seat 1. The seat device 20 of the embodiment is configured such that a front end side of the seating surface 2s is largely bulged toward the front side by expansion of the air bag 10.

More specifically, as illustrated in Figs. 3A and 3B, 4, and 5A to 5F, in the air bag 10 of the embodiment, the bag body 30 includes a first pressing seat 31 that forms the first pressing surface S1 and a second pressing seat 32 that forms the second pressing surface S2, and an intermediate member 33 that forms a side wall portion SW of the bag body 30 by connecting the first and second pressing seats 31 and 32.

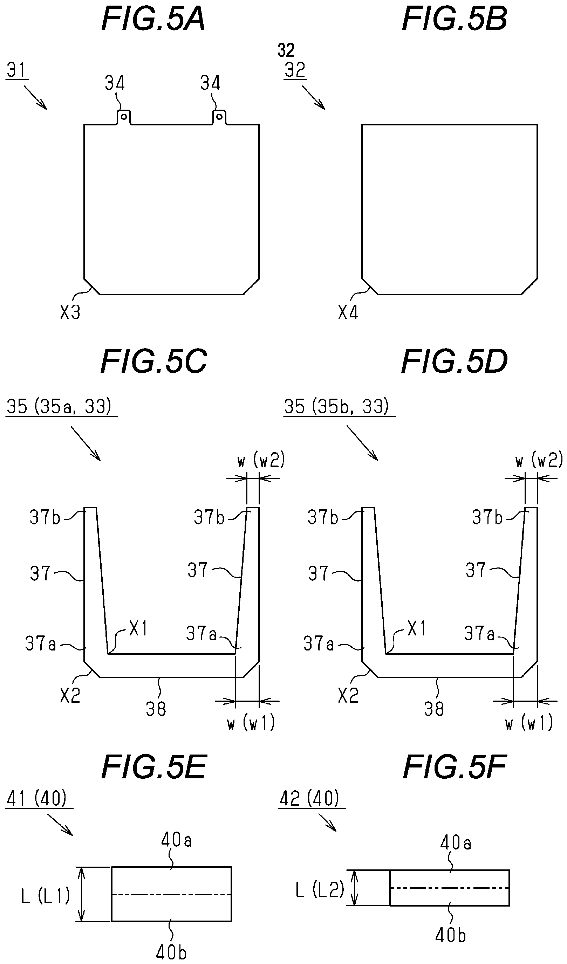

Specifically, the first and second pressing seats 31 and 32 have a substantially quadrangular (substantially square) planar shape. In addition, in the first pressing seat 31, fixing straps 34 are provided at one end (end portion on an upper side in Figs. 5A to 5F) on a second end portion 30b side of the bag body 30 in the length direction (upward and downward direction in Figs. 5A to 5F). In addition, as illustrated in Fig. 3B, the intermediate member 33 of the embodiment has a bellows structure. In the air bag 10 of the embodiment, the intermediate member 33 is configured such that a first end portion 30a side (h1) in the length direction of the bag body 30 is higher than a second end portion 30b side (h2) in the length direction (rightward and leftward direction in the same drawing) for a height dimension h (dimension in the upward and downward direction in Figs. 3A and 3B) of the side wall portion SW in a state where the bellows structure is developed (h1>h2).

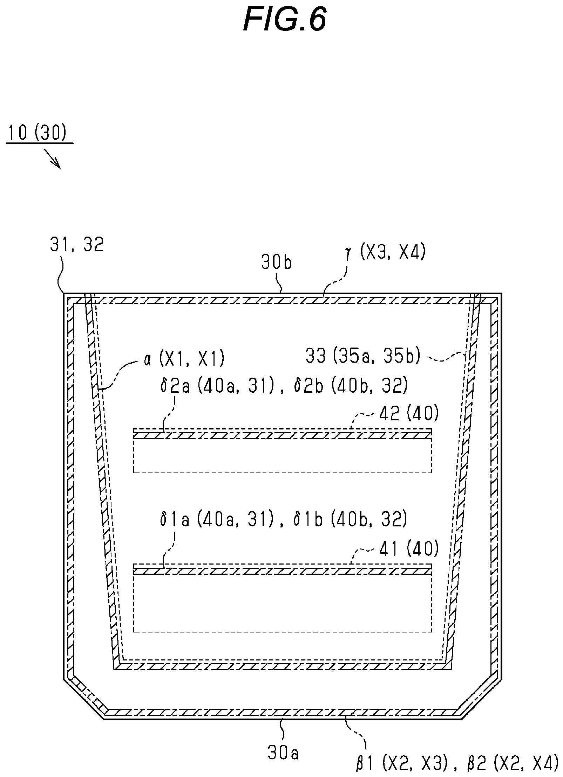

More specifically, as illustrated in Figs. 5A to 5F and 6, the intermediate member 33 of the embodiment is formed by connecting a pair of two intermediate seats 35 (35a and 35b) in a bellows shape. Specifically, each of the intermediate seats 35a and 35b of the embodiment has a substantially U-shaped planar shape. That is, each of the intermediate seats 35a and 35b includes a pair of lengthwise extending portions 37 that extends in the length direction of the bag body 30 and a widthwise extending portion 38 that connects the lengthwise extending portions 37 on a first end portion 37a side (end portion on a lower side in Figs. 5A to 5F) in the length direction. In a state where the widthwise extending portion 38 is disposed at a position (end portion on the lower side in Figs. 5A to 5F) that is the first end portion 30a of the bag body 30, each of the intermediate seats 35a and 35b is interposed between the first and second pressing seats 31 and 32.

Furthermore, in the air bag 10 of the embodiment, inner peripheral edge portions X1 of intermediate seats 35a and 35b are fixed respectively (fixed portion α). In addition, an outer peripheral edge portion X2 of the first intermediate seat 35a is fixed to an outer peripheral edge portion X3 of the first pressing seat 31 (fixed portion β1) and an outer peripheral edge portion X2 of the second intermediate seat 35b is fixed to an outer peripheral edge portion X4 of the second pressing seat 32 (fixed portion β2). Therefore, the air bag 10 of the embodiment is configured such that the intermediate member 33 having the bellows structure, that is the side wall portion SW of the bag body 30 is formed.

In addition, in the air bag 10 of the embodiment, for a portion that is the second end portion 30b of the bag body 30, the outer peripheral edge portions X3 and X4 of the first and second pressing seats 31 and 32 are fixed to each other (fixed portion γ). In addition, as illustrated in Fig. 4, the air tube 11 forming the flow path of air is configured so as to be pinched between the first and second pressing seats 31 and 32 when the seat materials are bonded together. Furthermore, each of the seat materials (31, 32, and 35) forming the bag body 30 are fixed to each other, for example, by high frequency welding or the like. In Fig. 6, the fixed portions (α, β1, β2, and γ) of the seat materials are respectively indicated by hatching.

Furthermore, each intermediate seat 35 of the embodiment is formed such that a widthwise dimension w (dimension in the rightward and leftward direction in Figs. 5A to 5F) of the lengthwise extending portion 37 is gradually increased from a second end portion 37b side in each lengthwise extending portion 37 toward the first end portion 37a side, that is, from the second end portion 30b side (w2) of the bag body 30 in the length direction toward the first end portion 30a side (w1) (w1 >w2). Therefore, the intermediate member 33 of the embodiment is configured such that a height dimension h1 on the first end portion 30a side is greater than a height dimension h2 on the second end portion 30b side in the side wall portion SW in a state where intermediate seats 35 connected to each other are developed in the bellows shape, that is, the bag body 30 is expanded.

In addition, as illustrated in Figs. 4 to 6, the air bag 10 of the embodiment includes connecting seats 40 connecting the first and second pressing seats 31 and 32 on the inside of the bag body 30 having the configuration as described above.

Specifically, the air bag 10 of the embodiment includes first and second connecting seats 41 and 42 aligned in the length direction of the bag body 30. In addition, in the air bag 10 of the embodiment, each of the connecting seats 40 (41 and 42) has a rectangular planar shape extending in the width direction (rightward and leftward direction in Figs. 5A to 5F) of the bag body 30. Furthermore, each connecting seat 40 has two sides extending in the width direction of the bag body 30, which respectively configure a first connecting end 40a fixed to the first pressing seat 31 and a second connecting end 40b fixed to the second pressing seat 32. Each connecting seat 40 is configured to be interposed between the first and second pressing seats 31 and 32 in a state of being folded into two.

In addition, in the air bag 10 of the embodiment, the first and second connecting ends 40a and 40b of each connecting seat 40 are also connected to the first and second pressing seats 31 and 32, for example, by high frequency welding or the like. In Fig. 6, fixed portions δ1a, δ1b, δ2a, and δ2b thereof are indicated by hatching.

In addition, in the air bag 10 of the embodiment, the first connecting seat 41 is disposed at a position closer to the first end portion 30a side than the second connecting seat 42 in the length direction of the bag body 30. For a length of a short side in each connecting seat 40, that is, the length (connecting length L) between the first connecting end 40a fixed to the first pressing seat 31 and the second connecting end 40b fixed to the second pressing seat 32, the first connecting seat 41 that is positioned on the first end portion 30a side is longer than the second connecting seat 42 that is positioned on the second end portion 30b side of the bag body 30 (L1>L2).

That is, the first and second pressing seats 31 and 32 are connected via the connecting seats 40 provided on the inside of the bag body 30 so that separation distances D (D1 and D2) between the first and second pressing seats 31 and 32 are defined at portions at which the connecting seats 40 (41 and 42) are provided. Therefore, the air bag 10 of the embodiment is configured such that the separation distance D, that is, the connecting length L of the connecting seat 40 is increased (D1>D2) toward the first end portion 30a side in the length direction of the bag body 30 and thereby the bag body 30 is configured to form a substantially wedge-shaped expansion shape having further planar pressing surfaces S1 and S2.

As described above, according to the embodiment, the following effects can be obtained.
(1) The air bag 10 includes the bag body 30 having the first and second pressing surfaces S1 and S2 facing each other in the opposite directions. In addition, the bag body 30 includes the first pressing seat 31 forming the first pressing surface S1, the second pressing seat 32 forming the second pressing surface S2, and the intermediate member 33 forming the side wall portion SW of the bag body 30 by connecting the first and second pressing seats 31 and 32. Furthermore, the intermediate member 33 has the bellows structure. The intermediate member 33 is configured such that, for the height dimension h of the side wall portion SW in a state where the bellows structure is developed, the first end portion 30a side is higher than the second end portion 30b side in the length direction of the bag body 30 (h1>h2).
   According to the above-described configuration, it is possible to form a substantially wedge-shaped expansion shape in which the first end portion 30a side is bulged greater than the second end portion 30b side in the length direction of the bag body 30. Therefore, when the air bag 10 is expanded, deformation of the first and second pressing surfaces S1 and S2 are suppressed and wider pressing area can be secured. As a result, the pressing force generated by the expansion of the air bag can be effectively transmitted. In addition, deterioration of an aesthetic appearance due to an expanded shape of the air bag 10, for example, deformation of the design surface caused by expansion of the air bag 10 provided inside, or the like can be suppressed.
(2) The intermediate member 33 is formed by connecting the pair of two intermediate seats 35 (35a and 35b) in a bellows shape. In addition, each intermediate seat 35 includes the lengthwise extending portion 37 extending in the length direction of the bag body 30. The lengthwise extending portion 37 is formed so that the widthwise dimension w is gradually wider from the second end portion 30b side to the first end portion 30a side in the length direction of the bag body 30 (w1 >w2).
   According to the above-described configuration, the height dimension h1 on the first end portion 30a side is greater than the height dimension h2 on the second end portion 30b side in the side wall portion SW in a state where intermediate seats 35 connected to each other are developed in the bellows shape, that is, the bag body 30 is expanded. Therefore, the bag body 30 can be bulged in a substantially wedge shape.
(3) The air bag 10 includes the connecting seat 40 connecting between the first and second pressing seats 31 and 32 on the inside of the bag body 30 by fixing the first connecting end 40a to the first pressing seat 31 and fixing the second connecting end 40b to the second pressing seat 32.
   That is, the separation distances D (D1 and D2) are defined between the first and second pressing seats 31 and 32 at portions at which the connecting seats 40 (41 and 42) are provided by connecting the first and second pressing seats 31 and 32 via the connecting seat 40 provided on the inside of the bag body 30. According to the above-described configuration, when the air bag 10 is expanded, deformation of the first and second pressing surfaces S1 and S2 is suppressed and a further preferable expanded shape can be formed.
(4) The air bag 10 includes the first and second connecting seats 41 and 42 aligned in the length direction of the bag body 30 as the connecting seats 40. The length (connecting length L1) between the first connecting end 40a and the second connecting end 40b in the first connecting seat 41 disposed on the first end portion 30a side of the bag body 30 is set to longer than the length (connecting length L2) between the first connecting end 40a and the second connecting end 40b in the second connecting seat 42 disposed on the second end portion 30b side of the bag body 30.
   According to the above-described configuration, the separation distance D (D1) between the first and second connecting seats 41 and 42 at the position on the first end portion 30a side, at which the first connecting seat 41 is provided can be set to greater than the separation distance D (D2) at the position on the second end portion 30b side, at which the second connecting seat 42 is provided (D1>D2). Therefore, when the air bag 10 is expanded, deformation of the first and second pressing surfaces S1 and S2 is suppressed and a further preferable wedge-shaped expanded shape can be formed.
(5) In each of the connecting seats 40 (41 and 42), the first connecting end 40a fixed to the first pressing seat 31 and the second connecting end 40b fixed to the second pressing seat 32 are extended in the width direction of the bag body 30.
   According to the above-described configuration, the separation distance D can be defined between the first and second pressing seats 31 and 32 in a range in which the first and second connecting ends 40a and 40b extending in the width direction of the bag body 30 are fixed when the air bag 10 is expanded. Therefore, deformation of the first and second pressing surfaces S1 and S2 can be further effectively suppressed and a substantially preferable wedge-shaped expansion shape can be formed.
(6) The connecting seat 40 is disposed on the inside of the bag body 30 in a state of being folded into two. Therefore, the thickness (height dimension) of the bag body 30 in the contracted state can be suppressed. When the air bag 10 is expanded and contracted, the connecting seat 40 can be further smoothly developed and folded on the inside of the bag body 30.

Moreover, the above-described embodiment may be deformed as follows.

In the above-described embodiment, the air bag 10 is provided on the inside of the seat cover 1x configuring the seating surface 2s at the front position of the seat cushion 2. However, the disclosure is not limited to the embodiment but the air bag 10 may be provided on a rear side position of the seat cushion 2 or the inside of the seat cover 1x configuring a backrest surface 3s (see Fig. 1) of the seat back 3. That is, it is possible to enhance the support performance of the seat 1 or improve the ease of getting on and off of the occupant by changing the seat shape at a rear side position (cushion pelvis) of the seat cushion 2, a lower side position (back pelvis and lumbar) of the seat back 3, or an upper side position (shoulder and lumbar) of the seat back 3.

In addition, in a case where the air bag 10 is disposed at the rear side position of the seat cushion 2, the first end portion 30a of the bag body 30 bulged in a substantially wedge shaped, that is, an end portion which bulges more largely may be disposed toward the rear side (see Figs. 2A and 2B, the right side in the same drawing) of the seat cushion 2. In addition, in a case where the air bag 10 is disposed at the lower side position of the seat back 3, the first end portion 30a of the bag body 30 may be disposed toward the lower side of the seat back 3. In a case where the air bag 10 is disposed at the upper side position of the seat back 3, the first end portion 30a of the bag body 30 may be disposed toward the upper side of the seat back 3.

In addition, a cushion member may be accommodated on the inside of the bag body 30. Therefore, it is possible to reduce a substantially content amount (exhaust amount) of the bag body 30 and shorten the time required for expansion and contraction thereof. In a case where the bag body 30 is in the contracted state, the cushion member disposed on the inside of the bag body 30 can impart a good feel to the air bag 10.

In the above-described embodiment, the intermediate member 33 forming the side wall portion SW of the bag body 30, which connects between the first and second pressing seats 31 and 32 has the bellows structure formed by connecting the pair of two intermediate seats 35 (35a and 35b). However, the disclosure is not limited to the embodiment but the intermediate member 33 may be configured with a single member. In addition, the intermediate member 33 may also be a configuration having a multiple-stepped bellows structure. Also in this case, the intermediate member 33 may be formed with a single member, or may be configured by forming the intermediate member 33 by connecting a plurality of members by using a plurality of sets of the pair of two intermediate seats 35 (35a and 35b) which form one step of the bellows structure.

In addition, in the above-described embodiment, each of the intermediate seats 35a and 35b has a substantially U-shaped planar shape, but, for example, may be an annular shape adapted to the shapes of the outer peripheral edge portions X3 and X4 in the first and second pressing seats 31 and 32, such as a substantially rectangular shape.

Furthermore, in the above-described embodiment, the inner peripheral edge portions X1 of the intermediate seats 35a and 35b are respectively fixed to each other. The outer peripheral edge portion X2 of the first intermediate seat 35a is fixed to the outer peripheral edge portion X3 of the first pressing seat 31, and the outer peripheral edge portion X2 of the second intermediate seat 35b is fixed to the outer peripheral edge portion X4 of the second pressing seat 32. However, the disclosure is not limited to the embodiment but the outer peripheral edge portions X2 of the intermediate seats 35a and 35b may be fixed to each other. The inner peripheral edge portion X1 of the first intermediate seat 35a may be fixed to the outer peripheral edge portion X3 of the first pressing seat 31, and the inner peripheral edge portion X1 of the second intermediate seat 35b may be fixed to the outer peripheral edge portion X4 of the second pressing seat 32.

In the above-described embodiment, the first and second connecting seats 41 and 42 aligned in the length direction are provided on the inside of the bag body 30. However, the disclosure is not limited to the embodiment but three connecting seats 40 or more aligned in the length direction of the bag body 30 may be provided. In this case, the length between the first connecting end 40a fixed to the first pressing seat 31 and the second connecting end 40b fixed to the second pressing seat 32, that is, the connecting length L may be increased at the position closer to the first end portion 30a of the bag body 30. That is, by adopting such a configuration, for any two connecting seats 40 aligned in the length direction of the bag body 30, the connecting seat 40 which is closer to the first end portion 30a in the length direction configures the first connecting seat 41 and the connecting seat 40 which is closer to the second end portion 30b configures the second connecting seat 42. Therefore, when the air bag 10 is expanded, deformation of the first and second pressing surfaces S1 and S2 can be suppressed and a substantially preferable wedge-shaped expansion shape can be formed.

In addition, in the above-described embodiment, each of the connecting seats 40 (41 and 42) has a rectangular-shaped planar shape extending in the width direction of the bag body 30. Therefore, the first connecting end 40a fixed to the first pressing seat 31 and the second connecting end 40b fixed to the second pressing seat 32 are extended in the width direction of the bag body 30. However, the disclosure is not limited to the embodiment but the shape of the connecting seat 40 may be arbitrarily changed. A plurality of the connecting seats 40 aligned in the width direction of the bag body 30 may be provided. Also, the same effects as those of the above-described embodiment can be obtained by adopting such a configuration.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

An air bag (10) includes: a bag body (30) that includes first and second pressing surfaces which face opposite to each other, in which the bag body includes a first pressing seat (31) that forms the first pressing surface, a second pressing seat (32) that forms the second pressing surface, and an intermediate member (33) that connects between the first and second pressing seats to form a side wall portion (SW) of the bag body, and the intermediate member has a bellows structure and is configured such that a first end portion (30a) side is higher than a second end portion (30b) side in a length direction of the bag body with respect to a height dimension of the side wall portion in a state where the bellows structure is developed.

## Claims

1. An air bag (10) comprising:
a bag body (30) that includes first and second pressing surfaces which face opposite to each other,
wherein the bag body includes
a first pressing seat (31) that forms the first pressing surface,
a second pressing seat (32) that forms the second pressing surface, and
an intermediate member (33) that connects between the first and second pressing seats to form a side wall portion (SW) of the bag body, and
the intermediate member has a bellows structure and is configured such that a first end portion (30a) side is higher than a second end portion (30b) side in a length direction of the bag body with respect to a height dimension of the side wall portion in a state where the bellows structure is developed.

2. The air bag according to claim 1,
wherein the intermediate member is formed by connecting a pair of two intermediate seats (35a, 35b) in a bellows shape, and
each of the intermediate seats includes a lengthwise extending portion (37) extending in a length direction of the bag body and is formed such that a dimension of the lengthwise extending portion in a width direction is gradually increased from a second end portion (37b) side toward a first end portion (37a) side in the length direction of the bag body.

3. The air bag according to claim 1 or 2, further comprising:
a connecting seat (40) that connects between the first and second pressing seats on an inside of the bag body by fixing a first connecting end (40a) to the first pressing seat and fixing a second connecting end (40b) to the second pressing seat.

4. The air bag according to claim 3, further comprising:
first and second connecting seats (41, 42) that are aligned in the length direction of the bag body as the connecting seat,
wherein a length between the first connecting end and the second connecting end in the first connecting seat disposed on the first end portion side of the bag body in the length direction is longer than a length between the first connecting end and the second connecting end in the second connecting seat disposed on the second end portion side of the bag body in the length direction.

5. The air bag according to claim 3 or 4,
wherein in the connecting seat, the first connecting end fixed to the first pressing seat and the second connecting end fixed to the second pressing seat are extended in the width direction of the bag body.

6. The air bag according to any one of claims 3 to 5,
wherein the connecting seat is disposed on the inside of the bag body in a state of being folded into two.

7. A vehicle seat device comprising the air bag according to any one of claims 1 to 6 is disposed on an inside of a seat cover.
